# EUROPEAN PATENT SPECIFICATION

(11) **EP 2 623 843 B1**
(45) Date of publication and mention of the grant of the patent: **16.01.2019**
(21) Application number: 13153681.5
(22) Date of filing: 01.02.2013
(51) Int. Cl.: F16L 57/02, F16L 11/12

(54) **Combination of a heating device, a connector, and a gas meter, as well as method for measuring a property of a gas**
Kombination aus Heizvorrichtung, Anschlussteil und Gasmesser sowie Verfahren zum Messen einer Eigenschaft eines Gases
Combinaison d'un dispositif de chauffage, connecteur et compteur de gaz, et procédé permettant de mesurer une propriété d'un gaz

(30) Priority: 03.02.2012 NL 2008232
(43) Date of publication of application: 07.08.2013
(73) Proprietor: ROBERT BOSCH GMBH, 70442 Stuttgart (DE)
(72) Inventor: Langenkamp, Teunis Jan Hendrik, 7244 BA BARCHEM (NL); Moes, Sebastiaan, 7468 SH ENTER (NL)

(56) References cited:
- EP-A2- 0 197 546
- EP-A2- 0 877 211
- EP-A2- 1 396 276
- EP-A2- 2 244 078
- WO-A1-03/035160
- WO-A1-2004/095666
- WO-A1-2010/076225
- CA-A1- 2 492 231
- DE-A1-102006 059 350
- DE-A1-102008 007 552
- DE-U1-202008 012 954
- US-A1- 2001 003 354
- US-A1- 2010 180 974

## Description

The invention relates to a combination of a heating device, a connector, and a gas meter, according to the preamble of claim 1. Such a combination is used to measure a property of the gas, such as a gas pressure, while testing the heating device. Other properties than the gas pressure may be measured with a gas meter too, such as a calorific value, a temperature, a density, a humidity, or a contamination of the gas. During normal use, the heating device is not provided with such a gas meter, and the heating device is just equipped with a gas nipple which is intended to be used as a temporary connection point to the gas meter.

It is known from practice to connect a gas nipple of a heating device to a gas pressure meter via a plastic flexible tube, such as a silicone tube, which serves as connector between the heating device and the gas meter. The tube is pushed over the gas nipple. In order to establish a reliable connection, which withstands the gas pressure, the dimensions and elasticity of the tube are such, that a considerable force is applied to the tube in an axial direction thereof. In order to be able to do so, the user needs to put his hands on the tube close to the gas nipple.

A problem of the known combination is that it is difficult to attach the tube to the gas nipple when the gas nipple is provided close to a wall of the heating device and/or close to other components in the heating device.

The invention aims to overcome this problem, or to at least provide an alternative solution. In particular, the invention aims to provide a combination of a heating device, a connector, and a gas meter, wherein the connector can be put on a gas nipple, even if the gas nipple is located close to a wall of the heating device and/or close to other components in the heating device.

The invention achieves the object by providing a combination of a heating device, a connector, and a gas meter, according to claim 1. Advantageous embodiments are defined in the dependent claims.

A combination of a heating device, a connector, and a gas meter, wherein the heating device comprises a gas pipe, a gas nipple, a burner, a heat exchanger for heating a medium flowing through the heat exchanger, and an exhaust gas conduit. The gas meter is arranged to measure a property of a gas, such as the pressure, in the heating device. The connector extends between a device end and a meter end, the connector comprises an elongated member, a rigid member, and meter connecting means for connecting the connector to the gas meter at the meter end. The elongated member is made of a flexible material and is provided with a through channel. The through channel is arranged as a nipple connector at the device end of the connector and provides a fluid connection for guiding gas from the nipple connector to the meter connecting means. An inner diameter of the nipple connector is smaller than an outer diameter of the gas nipple, and the flexibility of the flexible material is such that the nipple connector is releasable connectable over the gas nipple. The rigid member is made of a material which is more rigid than the flexible material of the elongated member and supports the elongated member. The rigid member extends in a longitudinal direction of the elongated member over a length which at least corresponds to a length of the nipple connector in the longitudinal direction of the elongated member. The rigid member extends in a circumferential direction of the elongated member over less than half of the circumference of the elongated member. The rigid member and the elongated member are interconnected at least at the nipple connector.

By providing a rigid member, a user can apply an axial force on the nipple connector via the rigid member from a distance, without the elongated member buckling. As the rigid member extends of less than half of the circumference of the elongated member, the nipple connector remains flexible to receive the gas nipple, even while the rigid member is connected to the elongated member at the nipple connector. The results in small cross-sectional dimensions of the connector, so that it can be inserted in places of the heating device wherein there are walls and other components of the heating device close by. As the rigid member extends in a longitudinal direction of the elongated member over a certain minimum length the user can push the connector on the gas nipple from a certain distance.

It is noted that US-988.917 discloses an air pressure indicator to measure the pressure in pneumatic tires. The indicator comprises a cylindrical body portion having a passage extending longitudinally there through. The passage has at its lower terminal a transverse opening in which is secured the pressure indicator. The upper terminal of the body portion is secured to an enlarged collar. The collar has mounted therein a rubber gasket which is cylindrical in formation and is provided with an approximately conical formed opening, about the upper edge of which is an inwardly extending flange which bears against a flange formed about the upper edge of the collar. A tire nipple can be inserted in the conical formed opening and has the threads thereof securely engaged by the flange of the gasket.

US-988.917 does not disclose are suggest measuring a gas pressure of a heating device. Moreover, the device of US-988.917 would not solve the problems mentioned previously, as the collar makes the air pressure indicator quite wide, so that it still would not be able to reach a gas nipple in a heating device in which the gas nipple is provided close to a wall of the heating device and/or close to other components in the heating device. Accordingly, the claimed invention further distinguishes over US-988.917 in that the rigid member extends in a circumferential direction of the elongated member over less than half of the circumference of the elongated member, and that the rigid member and the elongated member are interconnected at least at the nipple connector.

It is also noted that WO-2010/076225 discloses a tube assembly that includes a single layer tube and a sheath disposed on the single layer tube. The sheath may act as an outer surface of the tube assembly. The sheath includes a polymer that may be the same or different than the thermoplastic polyurethane or the polyamide 6/66 copolymer of the single layer tube. In one embodiment, the sheath is the same as the single layer tube. In other embodiments, the sheath includes fibres.

The present invention distinguishes over WO-2010/076225 in that the invention relates to a combination of a heating device, a connector, and a gas meter. No such combination is disclosed in WO-2010/076225, let alone the specifically claimed orientation of the connector between a gas nipple of the heating device and the gas meter, and the claimed dimension and flexibility of the connector relative to the outer diameter of the gas nipple. In so far one would consider the single layer tube to be suitable as a connector, then the connector differs over the known single layer tube at least in that the claimed rigid member is more rigid than the claimed flexible material of the elongated member, and that the rigid member extends in a circumferential direction of the elongated member over less than half of the circumference of the elongated member.

EP0877211 discloses a combination of a heater, a meter and several connectors for gas and water.

In an embodiment, the rigid member extends over substantially the whole length of the connector. This provides a maximum reach for the connector at a given length of the connector.

In an embodiment, the rigid member abuts the elongated member over at least 95% of the length of the elongated member. As the rigid member and the elongated member abut each other, the width of the connector is minimal.

In an embodiment, the rigid member has an outer wall, facing an outside of the connector, and an inner wall facing the elongated member, wherein substantially the whole inner wall abuts the elongated member. As the inner wall of the rigid member of the elongated member abut each other, the width of the connector is minimal.

In an embodiment, the rigid member adheres to the elongated member. This provides good quality interconnection which requires hardly any space.

In an embodiment, the elongated member and the rigid member are interconnected via form fit. This gives a reliable connection.

In an embodiment, the elongated member extends beyond the rigid member at the device end of the connector over more than 1% and less than 5% of the length of the elongated member. A relative short extension of the elongated member is possible, without the risk of buckling. Such an extension may facilitate the insertion of the gas nipple, as well as the interconnection of the elongated member and the rigid member.

In particular, the connector comprises a protruding part, which protruding part radially protrudes from the elongated member at the device end of the connector, is integrally formed with the elongated member, and abuts an end face of the rigid member. Accordingly, the rigid member may applies a pushing force in an axial direction on the elongated member via its end face and the protruding part.

More in particular, the protruding part is at its radial end flush with the rigid member, so the protruding part does not increase the total width of the connector.

In an embodiment, the rigid member comprises a grip part, which grip part is formed in particular by a first outer wall part of the rigid member with a reduced radial distance towards the channel and a second outer wall part of the rigid member with a radial distance towards the channel which is increased with respect to the first outer wall part, wherein the second outer wall part is closer to the device end of the connector than the first outer wall part. Providing such a grip part facilitates the handling of the connector in small spaces.

In an embodiment, the meter connecting means comprises a tubular section arranged to be inserted in a tube which is connected to the gas meter. Such a tubular section provides a simple interconnection.

In particular, the tubular section comprises at least one radial protruding ridge on the outer circumference of the tubular section. This makes the connection between the connector and a tube to the gas meter more secure.

The invention further relates to a method for measuring a property of a gas, such as the pressure, in a heating device, as defined in an independent claim.

The invention will be explained in more detail with reference to an embodiment, which is shown in the drawings, wherein:
Fig. 1 shows a first perspective view of a connector according to the invention;
Fig. 2 shows a second perspective view of the connector of fig. 1; and
Fig. 3 shows a cross section at a nipple connector through the connector of fig. 1.

A connector according to the invention is denoted in the figures in its entirety with reference number 1. The connector 1 is to be used in combination with a heating device, and a gas meter (not shown). The connector extends between a device end 2 and a meter end 4. The connector comprises an flexible elongated member 6, a rigid member 8, and a protruding tubular end 10 at the meter end. The protruding tubular section 10 serves as meter connecting means for connecting the connector 1 to the gas meter.

The elongated member 6 is made of a plastic material, in this case a thermoplastic elastomer (TPE). The rigid member 8 is made of a plastic material which is more rigid than the flexible material of the elongated member, in this case polypropylene (PP).

The elongated member 6 is provided with a through channel 12. The through channel 12 is arranged as a nipple connector 14 at the device end 2 of the connector 1. The channel 12 provides a fluid connection for guiding gas from the nipple connector 14 to the meter connecting means 10. Beyond the nipple connector 14, the channel 12 continues in a channel (not shown) within a core (not shown) of the rigid member which is integrated with the protruding tubular end 10.

The length of the nipple connector is substantially 15 mm. An inner diameter D of the nipple connector 14 is smaller that an outer diameter of a gas nipple for which the connector 1 is designed. In this embodiment, diameter D is 5 mm. Thanks to the flexibility of the flexible material, the nipple connector 14 will stretch in the radial direction when it is pushed over the gas nipple. In order to assist this, the nipple connector 14 tapers slightly at the device end 2.

The rigid member 8 supports the elongated member 6 to prevent that the elongated member buckles 6 when pushed over the gas nipple. The rigid member 8 has an outer wall 16, facing an outside of the connector 1, and an inner 18 wall facing a connecting wall 19 of the elongated member 6. The whole inner wall 18 abuts the connecting wall 19 of the elongated member 6, and adheres to this through adhesive forces. These adhesive forces may result from injecting plastic material in a mould for forming one of the elongated member 6, and the rigid member 8, in which mould the other of the elongated member 6, and the rigid member 8 is already present. A binding agent may be applied to the member which is already present in the mould to promote the adhesive force, but this is not necessary, especially if there is also provided form fit as described below. As an alternative, both members 6,8 may be produced separately and then glued together.

The interconnection between the elongated member 6, and the rigid member 8 is provided by form fit between, in this case three, protruding parts 20, 22, 24 of the elongated member and corresponding contact surfaces of the rigid member. The protruding parts radially protrude from the elongated member 6. The first protruding part 20 is located at the device end 2 of the connector 1 and abuts an end face 26 of the rigid member 8. For this purpose, the elongated member 6 extends beyond the rigid member 8 at the device end 2 of the connector 1 over approximately 3% % of the length of the elongated member 6. Further form fit is provided by the not shown core of the rigid member 8 which has protruding annular ridges.

The second, and third protruding parts 22, 24 are located at a distance from the device end 2 of the connector 1. The second protruding part 22 is closer to the device end 2 than to the meter end 4. The third protruding part 24 extends over more than half the length of the connector 1. The second and third protruding parts 22, 24 are held in holes in the rigid member 8 with a shape corresponding to that of the second and third protruding parts 22, 24. The protruding parts 20, 22, 24 are integrally formed with the elongated member 6 from the same flexible material. The radial ends of the protruding parts 20, 22, 24 are flush with the outer wall 16 of the rigid member 8.

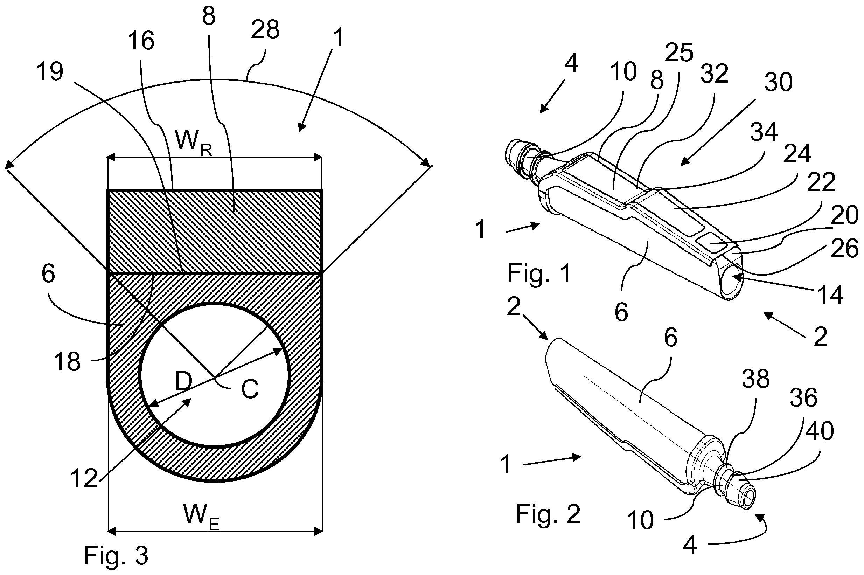

The rigid member 8 extends in a longitudinal direction of the elongated member over the whole length of the elongated member 6. The rigid member 8 extends over a quarter 28 of the circumference of the elongated member at the nipple connector 14. The circumference is related to the centre line C of the channel 12 of the elongated member 6 at the nipple connector 14, as seen in the cross section through the elongated member 6 of fig. 1. The circumference is measured as an angle. The width W_{R} of the rigid member 8 is equal to the width W_{E} of the elongated member 6, and of the whole connector 1.

The rigid member 8 comprises a grip part 30, which grip part 30 is formed by a first outer wall part 32 of the connector 1, in this case both the elongated member 6 and the rigid member 8, with a reduced radial distance towards the channel and a second outer wall part 34 of the connector 1 with a radial distance from the centerline C of the channel 12 which is increased with respect to the first outer wall part 32. The second outer wall part 34 is closer to the device end 2 of the connector 1 than the first outer wall part 32. The grip part 30 as a whole is arranged substantially halfway the length of the connector 1.

The tubular section 10 is arranged to be inserted in a tube which is connected to the gas meter and comprises a first 36 and a second 38 annular ridge on the outer circumference of the tubular section 10. The ridges 36, 38 protrude in the radial direction from the outer circumference of the tubular section 10. The first ridge 36 is provided with a conical surface 40 directed to the meter end 4 of the connector 1 in order to facilitate insertion of the tubular section 10 into the tube.

The connector 1 is used to connect a gas pressure meter to a heating device. At the meter end 4, the connector 1 is connected with a tube to the gas meter. Then the connector is inserted into the (open) housing of the heating device such, that the nipple connector is aligned with a gas valve nipple of the heating device. Then the nipple connector 14 is pushed over the gas valve nipple of the heating device and gas pressure is measured. Thanks to the rigid member 8, the elongated member 6 does not buckle, even if the user grips the connector 1 at the grip part 30, which is located at quite some distance from the device end 2, and even not if the user grips the connector 1 closer to the meter end 4. Thanks to the small circumferential dimension of the rigid member, and the possibility to grasp the connector 1 at some distance from the device end 2, the connector can reach the gas valve nipple even in places where access to the gas nipple is limited due to other parts of the heating device in front of the gas nipple. The width and height of the shown connector at the nipple connector is substantially 10 mm. The overall height is substantially 17 mm. The overall width is substantially 14 mm.

The overall length of the connector depends on the dimensions of the heating device in question, as well as the arrangement of the components in the heating device. However, a preferred embodiment of the connector has a length of 90 mm. Preferably, the length is at least 50 mm. Preferably, the length is less than 120 mm, so that the connector fits well inside a tool box.

Several embodiments and variants are possible within the scope of the attached claims. The length of the elongated member in the shown embodiment is less than that of the rigid member, because it does not extend in the meter connecting means. The length of the elongated member and the rigid member may also be substantially the same. The length of the elongated member is at least equal to the length of the nipple connector.

The inner diameter D of the nipple connector may be 4-8 mm, in particular 5-7 mm. The length of the nipple connector may be 10-20 mm, in particular 13-17 mm.

In an embodiment wherein an inner wall of the rigid member and the connecting wall of the elongated member are tubular, co-axial with the channel, while the width of the rigid member and the elongated member are equal, as in the above embodiment, then the rigid member extends over half the circumference of the elongated member.

The interconnection between a rigid member and an elongated member may be provide by both adhesive forces, and form fit, as in the shown embodiment, or by just one of these two types of interconnection. Instead of providing an interconnection over the full length, there may be provided a partial interconnection close to the device end of the interconnector. Instead of providing an interconnection over the width of the contact surfaces between rigid member and elongated member, there may also be provide an interconnection by form fit and/or adhesive forces over part of the width.

## Claims

1. Combination of a heating device, a connector (1), and a gas meter, wherein
the heating device comprises a gas pipe, a gas nipple, a burner, a heat exchanger for heating a medium flowing through the heat exchanger, and an exhaust gas conduit,
the gas meter is arranged to measure a property of a gas, such as the pressure, in the heating device,
the connector (1) extends between a device end (2) and a meter end (4),
the connector (1) comprises an elongated member (6), and meter connecting means (10) for connecting the connector (1) to the gas meter at the meter end (4),
the elongated member (6) is made of a flexible material and is provided with a through channel (12),
the through channel (12) is arranged as a nipple connector (14) at the device end (2) of the connector (1) and provides a fluid connection for guiding gas from the nipple connector (14) to the meter connecting means (10), and
an inner diameter (D) of the nipple connector (14) is smaller than an outer diameter of the gas nipple, and the flexibility of the flexible material is such that the nipple connector (14) is releasably connectable over the gas nipple, wherein
the connector (1) further comprises a rigid member (8), wherein
the rigid member (8) is made of a material which is more rigid than the flexible material of the elongated member (6) and supports the elongated member (6),
the rigid member (8) extends in a longitudinal direction of the elongated member (6) over a length which at least corresponds to the length of the nipple connector (14) in the longitudinal direction of the elongated member (6), and in a circumferential direction of the elongated member (6) over less than half of the circumference of the elongated member (6), and
the rigid member (8) and the elongated member (6) are interconnected at least at the nipple connector (14).

2. Combination of a heating device, a connector (1), and a gas meter, according to claim 1, wherein the rigid member (8) extends over substantially the whole length of the connector (1).

3. Combination of a heating device, a connector (1), and a gas meter, according to claim 1, or 2, wherein the rigid member (8) abuts the elongated member (6) over at least 95% of the length of the elongated member (6).

4. Combination of a heating device, a connector (1), and a gas meter, according to any of the preceding claims, wherein the rigid member (8) has an outer wall (16), facing an outside of the connector (1), and an inner wall (20) facing the elongated member (6), wherein substantially the whole inner wall (20) abuts the elongated member (6).

5. Combination of a heating device, a connector (1), and a gas meter, according to any of the preceding claims, wherein the rigid member (8) adheres to the elongated member (6).

6. Combination of a heating device, a connector (1), and a gas meter, according to any of the preceding claims, wherein the elongated member (6) and the rigid member (8) are interconnected via form fit.

7. Combination of a heating device, a connector (1), and a gas meter, according to any of the preceding claims, wherein the elongated member (6) extends beyond the rigid member (8) at the device end (2) of the connector (1) over more than 1% and less than 5% of the length of the elongated member (6).

8. Combination of a heating device, a connector (1), and a gas meter, according to any of the preceding claims, wherein the connector (1) comprises a protruding part (20, 22, 24), which protruding part (20, 22, 24) radially protrudes from the elongated member (6) at the device end (2) of the connector (1), and is integrally formed with the elongated member (6).

9. Combination of a heating device, a connector (1), and a gas meter, according to claim 8, wherein the protruding part (20) abuts an end face (26) of the rigid member (8).

10. Combination of a heating device, a connector (1), and a gas meter, according to claim 8 or 9, wherein the protruding part (20, 22, 24) is at its radial end flush with the rigid member.

11. Combination of a heating device, a connector (1), and a gas meter, according to any of the preceding claims, further comprising a grip part (30).

12. Combination of a heating device, a connector (1), and a gas meter, according to claim 11, wherein the grip part (30) is formed by a first outer wall part (32) of connector (1) with a reduced radial distance towards the channel and a second outer wall part (34) of the connector (1) with a radial distance towards the channel which is increased with respect to the first outer wall part (32), wherein the second outer wall part (34) is closer to the device end (2) of the connector (1) than the first outer wall part (32).

13. Combination of a heating device, a connector (1), and a gas meter, according to any of the preceding claims, wherein the meter connecting means (10) comprises a tubular section (10) arranged to be inserted in a tube which is connected to the gas meter.

14. Combination of a heating device, a connector (1), and a gas meter, according to claim 13, further comprising at least one radial protruding ridge (36, 38) on the outer circumference of the tubular section (10).

15. Method for measuring a property of a gas, such as the pressure, in a heating device, comprising the steps of
providing a combination of a heating device, a connector (1), and a gas meter according to one of the preceding claims,
connecting the gas meter to the meter connecting means (10) of the connector (1), inserting the connector (1) into the heating device,
pushing the nipple connector (14) over the gas nipple of the heating device, and measuring the property of the gas.

## Patentansprüche

1. Kombination aus einer Heizvorrichtung, einem Verbindungsstück (1) und einem Gaszähler, wobei
die Heizvorrichtung eine Gasleitung, einen Gasnippel, einen Brenner, einen Wärmetauscher zum Erhitzen eines durch den Wärmetauscher strömenden Mediums und eine Abgasleitung umfasst,
der Gaszähler so angeordnet ist, dass er eine Eigenschaft eines Gases, wie zum Beispiel den Druck, in der Heizvorrichtung misst,
sich das Verbindungsstück (1) zwischen einem Vorrichtungsende (2) und einem Zählerende (4) erstreckt,
das Verbindungsstück (1) ein längserstrecktes Element (6) und ein Zählerverbindungsmittel (10) zum Verbinden des Verbindungsstücks (1) mit dem Gaszähler an dem Zählerende (4) umfasst,
das längserstreckte Element (6) aus einem flexiblen Material hergestellt und mit einem Durchgangskanal (12) versehen ist,
der Durchgangskanal (12) als ein Nippelverbindungsstück (14) an dem Vorrichtungsende (2) des Verbindungsstücks (1) angeordnet ist und eine Flüssigkeitsverbindung bereitstellt, um Gas von dem Nippelverbindungsstück (14) zu dem Zählerverbindungsmittel (10) zu leiten, und
ein Innendurchmesser (D) des Nippelverbindungsstücks (14) kleiner als ein Außendurchmesser das Gasnippels ist und die Flexibilität des flexiblen Materials derart ist, dass das Nippelverbindungsstück (14) auf lösbare Weise über dem Gasnippel verbindbar ist, wobei
das Verbindungsstück (1) ferner ein starres Element (8) umfasst, wobei
das starre Element (8) aus einem Material hergestellt ist, das starrer als das flexible Material des längserstreckten Elements (6) ist, und das längserstreckte Element (6) hält,
sich das starre Element (8) in einer Längsrichtung des längserstreckten Elements (6) über eine Länge, die wenigstens der Länge des Nippelverbindungsstücks (14) in der Längsrichtung des längserstreckten Elements (6) entspricht, und in einer Umfangsrichtung des längserstreckten Elements (6) über weniger als die Hälfte des Umfangs des längserstreckten Elements (6) erstreckt und
das starre Element (8) und das längserstreckte Element (6) wenigstens an dem Nippelverbindungsstück (14) miteinander verbunden sind.

2. Kombination aus einer Heizvorrichtung, einem Verbindungsstück (1) und einem Gaszähler nach Anspruch 1, wobei sich das starre Element (8) über die im Wesentlichen gesamte Länge des Verbindungsstücks (1) erstreckt.

3. Kombination aus einer Heizvorrichtung, einem Verbindungsstück (1) und einem Gaszähler nach Anspruch 1 oder 2, wobei das starre Element (8) wenigstens über 95% der Länge des längserstreckten Elements (6) an dem längserstreckten Element (6) anliegt.

4. Kombination aus einer Heizvorrichtung, einem Verbindungsstück (1) und einem Gaszähler nach einem der vorhergehenden Ansprüche, wobei das starre Element (8) eine Außenwand (16), die einer Außenseite des Verbindungsstücks (1) zugewandt ist, und eine Innenwand (20), die dem längserstreckten Element (6) zugewandt ist, aufweist, wobei im Wesentlichen die gesamte Innenwand (20) an dem längserstreckten Element (6) anliegt.

5. Kombination aus einer Heizvorrichtung, einem Verbindungsstück (1) und einem Gaszähler nach einem der vorhergehenden Ansprüche, wobei das starre Element (8) an dem längserstreckten Element (6) haftet.

6. Kombination aus einer Heizvorrichtung, einem Verbindungsstück (1) und einem Gaszähler nach einem der vorhergehenden Ansprüche, wobei das längserstreckte Element (6) und das starre Element (8) formschlüssig miteinander verbunden sind.

7. Kombination aus einer Heizvorrichtung, einem Verbindungsstück (1) und einem Gaszähler nach einem der vorhergehenden Ansprüche, wobei sich das längserstreckte Element (6) an dem Vorrichtungsende (2) des Verbindungsstücks (1) über mehr als 1% und weniger als 5% der Länge des längserstreckten Elements (6) über das starre Element (8) hinaus erstreckt.

8. Kombination aus einer Heizvorrichtung, einem Verbindungsstück (1) und einem Gaszähler nach einem der vorhergehenden Ansprüche, wobei das Verbindungsstück (1) einen vorstehenden Teil (20, 22, 24) umfasst, wobei der vorstehende Teil (20, 22, 24) an dem Vorrichtungsende (2) des Verbindungsstücks (1) radial von dem längserstreckten Element (6) vorsteht und einstückig mit dem längserstreckten Element (6) ausgebildet ist.

9. Kombination aus einer Heizvorrichtung, einem Verbindungsstück (1) und einem Gaszähler nach Anspruch 8, wobei der vorstehende Teil (20) an einer Endfläche (26) des starren Elements (8) anliegt.

10. Kombination aus einer Heizvorrichtung, einem Verbindungsstück (1) und einem Gaszähler nach Anspruch 8 oder 9, wobei der vorstehende Teil (20, 22, 24) an seinem radialen Ende bündig mit dem starren Element abschließt.

11. Kombination aus einer Heizvorrichtung, einem Verbindungsstück (1) und einem Gaszähler nach einem der vorhergehenden Ansprüche, ferner umfassend einen Griffteil (30).

12. Kombination aus einer Heizvorrichtung, einem Verbindungsstück (1) und einem Gaszähler nach Anspruch 11, wobei der Griffteil (30) durch einen ersten Außenwandteil (32) des Verbindungsstücks (1) mit einem verringerten radialen Abstand zu dem Kanal und einen zweiten Außenwandteil (34) des Verbindungsstücks (1) mit einem radialen Abstand zu dem Kanal gebildet ist, der in Bezug auf den ersten Außenwandteil (32) vergrößert ist, wobei der zweite Außenwandteil (34) näher an dem Vorrichtungsende (2) des Verbindungsstücks (1) als der erste Außenwandteil (32) liegt.

13. Kombination aus einer Heizvorrichtung, einem Verbindungsstück (1) und einem Gaszähler nach einem der vorhergehenden Ansprüche, wobei das Zählerverbindungsmittel (10) einen röhrenförmigen Abschnitt (10) umfasst, der so angeordnet ist, dass er in ein Rohr eingesetzt wird, das mit dem Gaszähler verbunden ist.

14. Kombination aus einer Heizvorrichtung, einem Verbindungsstück (1) und einem Gaszähler nach Anspruch 13, ferner umfassend wenigstens eine radiale vorstehende Rippe (36, 38) an dem Außenumfang des röhrenförmigen Abschnitts (10).

15. Verfahren zum Messen einer Eigenschaft eines Gases, wie zum Beispiel des Drucks, in einer Heizvorrichtung, umfassend die folgenden Schritte:
Bereitstellen einer Kombination aus einer Heizvorrichtung, einem Verbindungsstück (1) und einem Gaszähler nach einem der vorhergehenden Ansprüche,
Verbinden des Gaszählers mit dem Zählerverbindungsmittel (10) des Verbindungsstücks (1),
Einsetzen des Verbindungsstücks (1) in die Heizvorrichtung,
Schieben des Nippelverbindungsstücks (14) über den Gasnippel der Heizvorrichtung und
Messen der Eigenschaft des Gases.

## Revendications

1. Combinaison d'un dispositif de chauffage, d'un connecteur (1) et d'un compteur de gaz,
le dispositif de chauffage comportant un tuyau de gaz, un mamelon de gaz, un brûleur, un échangeur de chaleur servant à chauffer un milieu s'écoulant à travers l'échangeur de chaleur, et un conduit de gaz d'échappement,
le compteur de gaz étant disposé pour mesurer une propriété d'un gaz, telle que la pression, dans le dispositif de chauffage,
le connecteur (1) s'étendant entre une extrémité (2) de dispositif et une extrémité (4) de compteur,
le connecteur (1) comportant un élément allongé (6), et un moyen (10) de raccordement de compteur servant à raccorder le connecteur (1) au compteur de gaz au niveau de l'extrémité (4) de compteur,
l'élément allongé (6) étant constitué d'un matériau souple et étant muni d'un canal débouchant (12),
le canal débouchant (12) étant disposé comme un connecteur (14) de mamelon au niveau de l'extrémité (2) de dispositif du connecteur (1) et assurant une liaison fluidique pour guider du gaz du connecteur (14) de mamelon au moyen (10) de raccordement de compteur, et un diamètre intérieur (D) du connecteur (14) de mamelon étant plus petit qu'un diamètre extérieur du mamelon de gaz, et la souplesse du matériau souple étant telle que le connecteur (14) de mamelon peut être raccordé de façon libérable par-dessus le mamelon de gaz,
le connecteur (1) comportant en outre un élément rigide (8),
l'élément rigide (8) étant constitué d'un matériau qui est plus rigide que le matériau souple de l'élément allongé (6) et soutenant l'élément allongé (6), l'élément rigide (8) s'étendant dans une direction longitudinale de l'élément allongé (6) sur une longueur qui correspond au moins à la longueur du connecteur (14) de mamelon dans la direction longitudinale de l'élément allongé (6), et dans une direction circonférentielle de l'élément allongé (6) sur moins de la moitié de la circonférence de l'élément allongé (6), et
l'élément rigide (8) et l'élément allongé (6) étant interconnectés au moins au niveau du connecteur (14) de mamelon.

2. Combinaison d'un dispositif de chauffage, d'un connecteur (1) et d'un compteur de gaz, selon la revendication 1, l'élément rigide (8) s'étendant sensiblement sur toute la longueur du connecteur (1).

3. Combinaison d'un dispositif de chauffage, d'un connecteur (1) et d'un compteur de gaz, selon la revendication 1 ou 2, l'élément rigide (8) étant en appui contre l'élément allongé (6) sur au moins 95% de la longueur de l'élément allongé (6).

4. Combinaison d'un dispositif de chauffage, d'un connecteur (1) et d'un compteur de gaz, selon l'une quelconque des revendications précédentes, l'élément rigide (8) présentant une paroi extérieure (16), faisant face à un extérieur du connecteur (1), et une paroi intérieure (20) faisant face à l'élément allongé (6), sensiblement toute la paroi intérieure (20) étant en appui contre l'élément allongé (6).

5. Combinaison d'un dispositif de chauffage, d'un connecteur (1) et d'un compteur de gaz, selon l'une quelconque des revendications précédentes, l'élément rigide (8) adhérant à l'élément allongé (6).

6. Combinaison d'un dispositif de chauffage, d'un connecteur (1) et d'un compteur de gaz, selon l'une quelconque des revendications précédentes, l'élément allongé (6) et l'élément rigide (8) étant interconnectés via un ajustement de forme.

7. Combinaison d'un dispositif de chauffage, d'un connecteur (1) et d'un compteur de gaz, selon l'une quelconque des revendications précédentes, l'élément allongé (6) s'étendant au-delà de l'élément rigide (8) au niveau de l'extrémité (2) de dispositif du connecteur (1) sur plus de 1% et moins de 5% de la longueur de l'élément allongé (6).

8. Combinaison d'un dispositif de chauffage, d'un connecteur (1) et d'un compteur de gaz, selon l'une quelconque des revendications précédentes, le connecteur (1) comportant une partie saillante (20, 22, 24), ladite partie saillante (20, 22, 24) dépassant radialement de l'élément allongé (6) au niveau de l'extrémité (2) de dispositif du connecteur (1), et étant formée d'un seul tenant avec l'élément allongé (6) .

9. Combinaison d'un dispositif de chauffage, d'un connecteur (1) et d'un compteur de gaz, selon la revendication 8, la partie saillante (20) étant en appui contre une face (26) d'extrémité de l'élément rigide (8).

10. Combinaison d'un dispositif de chauffage, d'un connecteur (1) et d'un compteur de gaz, selon la revendication 8 ou 9, la partie saillante (20, 22, 24), à son extrémité radiale, affleurant l'élément rigide.

11. Combinaison d'un dispositif de chauffage, d'un connecteur (1) et d'un compteur de gaz, selon l'une quelconque des revendications précédentes, comportant en outre une partie (30) de préhension.

12. Combinaison d'un dispositif de chauffage, d'un connecteur (1) et d'un compteur de gaz, selon la revendication 11, la partie (30) de préhension étant formée par une première partie (32) de paroi extérieure de connecteur (1) présentant une distance radiale réduite en direction du canal et une deuxième partie (34) de paroi extérieure du connecteur (1) présentant une distance radiale en direction du canal qui est accrue par rapport à la première partie (32) de paroi extérieure, la deuxième partie (34) de paroi extérieure étant plus proche de l'extrémité (2) de dispositif du connecteur (1) que la première partie (32) de paroi extérieure.

13. Combinaison d'un dispositif de chauffage, d'un connecteur (1) et d'un compteur de gaz, selon l'une quelconque des revendications précédentes, le moyen (10) de raccordement de compteur comportant un tronçon tubulaire (10) disposé pour être inséré dans un tube qui est relié au compteur de gaz.

14. Combinaison d'un dispositif de chauffage, d'un connecteur (1) et d'un compteur de gaz, selon la revendication 13, comportant en outre au moins une collerette radiale saillante (36, 38) sur la circonférence extérieure du tronçon tubulaire (10).

15. Procédé de mesure d'une propriété d'un gaz, telle que la pression, dans un dispositif de chauffage, comportant les étapes consistant à
mettre en place une combinaison d'un dispositif de chauffage, d'un connecteur (1) et d'un compteur de gaz selon l'une des revendications précédentes,
raccorder le compteur de gaz au moyen (10) de raccordement de compteur du connecteur (1),
insérer le connecteur (1) dans le dispositif de chauffage,
emboîter le connecteur (14) de mamelon par-dessus le mamelon de gaz du dispositif de chauffage, et
mesurer la propriété du gaz.
